# EUROPÄISCHE PATENTSCHRIFT

(11) **EP 0 751 480 B1**
(45) Veröffentlichungstag und Bekanntmachung des Hinweises auf die Patenterteilung: **11.02.2004**
(21) Anmeldenummer: 96109348.1
(22) Anmeldetag: 11.06.1996
(51) Int. Cl.: G06K 19/14, G06K 19/06

(54) **Verfahren und Einrichtung zur Verschlüsselung und Überprüfung von Informationen in Form einer Vignette**
Method and device for encoding and verifying information in the form of a label
Méthode et dispositif de codage et de vérification d'information sous forme de vignette

(30) Priorität: 23.06.1995 DE 19522928
(43) Veröffentlichungstag der Anmeldung: 02.01.1997
(73) Patentinhaber: SIEMENS AKTIENGESELLSCHAFT, 80333 München (DE)
(72) Erfinder: Schwider, Johannes, Prof.-Dr., 91056 Erlangen (DE)

(56) Entgegenhaltungen:
- EP-A- 0 413 948
- EP-A- 0 449 164
- EP-A- 0 552 564
- WO-A-90/14640
- DE-A- 4 230 621
- DE-A- 4 317 822
- US-A- 4 257 669
- US-A- 5 284 364
- US-A- 5 422 473
- US-A- 5 440 109

## Beschreibung

Die Erfindung bezieht sich auf ein Verfahren und eine Einrichtung zur Verschlüsselung und Überprüfung von Informationen in Form einer Vignette.

Beispielsweise sollen für die Kennung von Fahrzeugen fälschungssichere Vignetten verwendet werden, die an der Innenseite der Frontscheibe installiert werden und zum Beispiel von einem Kontrollfahrzeug gelesen und überprüft werden sollen.

Die DE 43 17 822 A1 offenbart ein Verfahren und eine Anordnung zur eindeutigen Zuordnung von Messergebnissen im Straßenverkehr, wie sie etwa bei der Erfassung von Fahrzeugidentitäten zum Zwecke der automatisierten Abrechnung von Straßenbenutzungsgebühren mittels Plaketten erforderlich ist. Dazu weist eine erste Messanordnung zur Ermittlung von Fahrzeugpositionen eine Abfragestation zur Erfassung von Plakettennummern und eine Frontkamera zur Erfassung von Anzahl und Art vorbeifahrender Fahrzeuge auf, die beide eine sich ellipsenförmig über alle Spuren erstreckende Messzone überwachen. Die Abfragestation umfasst einen HF-Dauerstrich-Sender und einen HF-Empfänger mit Demodulator. Eine Plakette nutzt bei Empfang von HF-Energie einer bestimmten Frequenz die empfangene Energie, um auf derselben Frequenz ein mit der Nummer der Plakette und somit der Nummer des Fahrzeugs moduliertes Signal zurückzusenden, welches in der Abfragestation ausgewertet wird. Eine eindeutige Zuordnung zwischen den von der Kamera optisch erfassten Fahrzeugen und den Messergebnissen der Abfragestation ist nicht möglich. Erfindungsgemäß wird daher eine zweite Messanordnung verwendet, deren Art und Aufstellung so gewählt werden, dass nicht bei beiden Messanordnungen dieselben Mehrdeutigkeiten auftreten können. Beispielsweise werden die Messanordnungen auf verschiedenen Straßenseiten aufgestellt, so dass sich deren Messzonen diagonal kreuzen.

US 5,440,109 schlägt ein automatisches System zur Gebührenentrichtung vor, bei dem die Fahrzeuge ein On-Board-Gerät, ein Kommunikationsgerät, einen Fahrzeug-Transceiver und eine elektronische Geldbörse in Form einer Prozessorkarte mitführen. Zahlstationen sind an bestimmten Stellen entlang einer Straße angeordnet. Die Zahlstationen führen einen Datenaustausch mit einem drahtlosen Kommunikationsgerät durch und buchen eine Benutzungsgebühr ab. Zusätzlich zum Kommunikationsgerät wird an der Zahlstation ein Fahrzeuglokalisierungsgerät bereitgestellt, welches die Position eines gerade ankommenden Fahrzeugs aufgrund einer kurzandauernden optischen Signalausgabe durch den Fahrzeug-Transceiver identifiziert. Die kurzzeitige Kennung, die aus dem Kommunikationsprotokoll bekannt ist, wird dabei dem optischen Signal zugewiesen. Das optische Signal kann ein Infrarot-Lichtblitz sein, der bei Bedarf durch die Zahlstation ausgesandt wird. Das Fahrzeuglokalisierungsgerät ist eine infrarotsensitive Videokamera, welche die Position aufgrund eines optischen Bildes dieses Fahrzeugs mit computergesteuerter Auswertung identifiziert.

US 5,422,473 beschreibt eine Vorrichtung zur Identifizierung von Automobilen mittels eines IC-Karten-Adapters. Ein in einem Fahrzeug angeordneter IC-Karten-Adapter führt einen Informationsaustausch mit der Antenne eines straßenseitigen IC-Karten-Lesers über eine Radio- oder eine IR-Kommunikation aus, wohingegen eine Kamera ein Bild des Nummernschildes aufnimmt. Über den Informationsaustausch erhält der IC-Karten-Leser die ID-Nummer der im IC-Karten-Adapter eingeführten IC-Karte. Gehören Kfz-Kennzeichen und ID-Nummer zusammen, wird eine dem Fahrzeugtyp entsprechende Gebühr berechnet. Passen die Informationen nicht zusammen, wird eine Schranke geschlossen oder ein Foto aufgenommen.

Aus der WO 90/14640 ist ein Mautstellensystem bekannt, das aus einer Plakette, mindestens einer Kamera und einem Rechner mit neuralem Netz zur Steuerung der Aktivierung eines Schlagbaumes besteht. Die Plakette ist vorzugsweise auf der Windschutzscheibe eines Fahrzeuges befestigt. Die Ausgabe der Kamera, die die Plakette innerhalb ihres Sichtfeldes überprüft, wird über einen Multiplexer in das neurale Netz des Rechners eingespeist. Der Rechner steuert ein Aufnahmegerät, welches das Passieren der Plakette an der Mautstelle aufnimmt und den Schlagbaum nach Bedarf aktiviert. Benutzer der Mautstelle können entweder vorab eine Plakette für eine Anzahl von Mautstellenpassagen kaufen, oder sich diese zu einem späteren Zeitpunkt in Rechnung stellen lassen.

Bei dem in der EP 0 413 948 A1 offenbarten System zur optischen Datenübertragung, insbesondere mittels Infrarotstrahlung, zwischen einer ortsfesten Station und passierenden Fahrzeugen wird in einer ortsfesten Sende- bzw. Empfangseinrichtung jeweils eine optische Einrichtung vorgesehen, welche den Fahrbereich auf eine Bildebene abbildet, die zwischen der optischen Einrichtung und den Sendedioden bzw. Empfangsdioden liegt. In der genannten Bildebene ist eine Maske mit einer vorgegebenen Blendenöffnung angeordnet, wobei durch die Form der Blendenöffnung eine entsprechend scharf abgegrenzte Wirkfläche im Fahrbereich festgelegt wird. Nur solange sich das Fahrzeug bzw. sein Sender oder Empfänger im Bereich der Wirkfläche befindet, ist ein Informationsaustausch mit der Sendeund Empfangseinrichtung in der ortsfesten Station möglich. Auf diese Weise wird eine genaue Zuordnung der ausgetauschten Information zu einem bestimmten Fahrzeug ermöglicht. Dies ist wichtig für eine automatische Gebührenerhebung auf Autobahnen.

In der DE 27 56 632 A1 wurde bereits eine Vorrichtung zur fälschungssicheren Kennzeichnung von Gegenständen beschrieben. Die bekannte Kennzeichnung sieht eine Hologrammaufnahme auf einem Träger vor, der mit dem zu identifizierenden Gegenstand, zum Beispiel mit einem Fahrzeug, verbunden ist. Mittels eines kohärenten Lichtstrahls, dessen Wellenlänge der Wellenlänge des bei der Aufnahme des Hologramms verwendeten Lichtes entspricht, kann die Kennzeichnung überprüft werden. Die Herstellung von Hologrammen, insbesondere mit codierten Informationsinhalten, ist aufwendig.

Um die Authentizität einer Magnetspeicherkarte zu identifizieren, wird in EP 0 552 564 A1 gelehrt, einen einfallenden Detektionslichtstrahl mit einer bestimmten Wellenlänge und Polarisationsebene von einem Licht emittierenden Element, z.B. einem Laser, auszusenden. Die Polarisationsebene dieses einfallenden Lichts wird um 90° gedreht, in dem es auf einen Identifizierungsbereich der Karte auftrifft und von diesem reflektiert wird. Der Bereich weist eine ein Hologramm bildende Schicht, deren Dicke einem Viertel der Laserwellenlänge entspricht, und eine darunter liegende reflektierende Schicht auf. Aufgrund seiner beugenden Eigenschaft besitzt die Hologramm-Schicht eine besondere reflektierende Richtwirkung. Das reflektierte linear polarisierte Licht wird von einem Licht empfangenden Element in Form von in Sektoren angeordneten Leuchtdioden empfangen. Das Element ist in der Lage, die doppelbeugende Eigenschaft mittels eines Polarisationsfilters zu erkennen. Dieser ist derart orientiert, dass er nur Licht mit einer zur Polarisationsebene des einfallenden Lichts senkrechten Polarisationsebene empfängt.

Die US 5,284,364, gegen die die Ansprüche abgegrenzt sind, offenbart ein Sicherheits-system für Dokumente, wie z.B. Führerscheine, Reisepässe und Kreditkarten, die einen Datenträger aufweisen, der fotographische oder gedruckte Informationen auf einem Basisdruck enthält. Ein personifizierter, die Polarisation ändernder Überzug versiegelt den Basisdruck und ist mit zusätzlicher verschlüsselter Information kodiert, die mit Hilfe eines polarisierenden Sichtgerätes lesbar ist. Die Informationen mit niedriger Sicherheitsstufe, wie Name, Sozialversicherung, Kontonummer und Passbild, bilden auf eine Karte gedruckt den Basisdruck. Zusätzliche Informationen höherer Sicherheitsstufe, wie ein Strichcode oder alphanumerische Zeichen, sind in den die Polarisation ändernden Überzug in Form von sich abwechselnd polarisierenden und nicht polarisierenden Bereichen eingeprägt. Dem Datenträger ist seine Polarisationscodierte Information oberflächlich betrachtet nicht anzusehen. Wenn der Datenträger aber derart unter die Polarisationsfolie eines Sichtgerätes gelegt wird (durch Polizeibeamte oder Angestellte eines Spirituosenladens), dass die optische Achse der Folie senkrecht auf der optischen Achse des Überzugs steht, werden die Bereiche des Datenträgers mit Überzug undurchsichtig, während die freigelassenen, unpolarisierten Bereiche sichtbar bleiben. Bereiche mit unterschiedlicher Polarisierung lassen sich durch ein geeignetes physikalisches Verfahren herstellen, wie z.B. Bestrahlung oder thermische, chemische oder mechanische Behandlung.

Aufgabe der Erfindung ist es, ein Verfahren und eine Einrichtung hierzu anzugeben, welches gestattet, fälschungssichere Vignetten herzustellen und auch unter ungünstigen Bedingungen in einfacher Weise zu überprüfen. Die Vignette soll in codierter Form Informationen aufweisen, die mit bloßem Auge nicht lesbar sind, aber mit einer Überprüfeinrichtung auch bei schlechten Bedingungen, wie Blendung durch Nebenlicht (Scheinwerfer, Sonnenlicht, Lichtreflexe aller Art) oder schlechte Leseposition gelesen werden können.

Diese Aufgabe wird erfindungsgemäß durch die Merkmale des Anspruchs 1 gelöst. Eine derartig gefertigte und überwachte Vignette ist ohne einen erheblichen Aufwand und ohne genaue Kenntnis der Herstellung und Strukturierung nicht zu fälschen. Mit der Erfindung wird ein optisches Kontrastierungsverfahren bewirkt, welches aufgrund der starken Kontraste die Lesbarkeit der Vignette erhöht.

Die Strukturierung des den Polarisationszustand verändernden Elements kann in einer bevorzugten Weise durch Stanzen oder Schneiden erfolgen. Es kann aber auch durch örtlich variierende thermische oder UV-Behandlung oder durch Prägen oder Bedrucken die Strukturierung der Vignette erreicht werden.

In einer vorteilhaften Ausgestaltung der Erfindung wird der Lichtsender und die Detektoreinrichtung im nahen Infrarotbereich, z.B. bis 1000 nm Wellenlänge, betrieben. Das hat den Vorteil, daß die Vignette sichtbar nicht lesbar und zum Beispiel einfach transparent bzw. scheinbar ünstrukturiert ist.

Das Licht kann zweckmäßigerweise linear polarisiert ausgestrahlt werden. Das Licht kann auch zirkular polarisiert ausgestrahlt werden. Dabei muß dann das den Polarisationszustand verändernde Element entsprechend ausgestaltet sein.

In einer anderen Ausgestaltung der Erfindung kann das polarisierende Strukturelement der Vignette von einem Liquid-Crystal-Display gebildet sein, welches im doppelten Lichtdurchgang die Polarisationsebene des linear polarisierten Lichts um 90° dreht und dessen Struktur durch eine entsprechend geeignete Pixelierung, diese kann beispielsweise streifenförmig sein, erzeugt wird.

Zur Durchführung des erfindungsgemäßen Verfahrens weist die Vignette einen Reflektor auf, der von einer Retro-Reflektorfolie gebildet ist, wobei das den Polarisationszustand verändernde Element von einem strukturierten Polarisationsfilter gebildet ist. Dieses Polarisationsfilter kann in vorteilhafter Weise eine Viertelwellenlängen-Folie sein, deren "schnelle Achse" um 45° gegen die Polarisationsebene des eingestrahlten, linear polarisierten Lichtes gedreht orientiert ist. Eine derartige Folie läßt sich sehr preiswert aus Kunststoff, ebenso der Retroreflektor aus Kunststoff herstellen und entsprechend zueinander anordnen. Einer Viertelwellenlängen-Folie sieht man rein äußerlich nicht ihre Funktion an, da sie kein Licht absorbiert. Eine solche Folie dreht im doppelten Durchgang die Polarisationsebene um einen Winkel, der doppelt so groß ist, wie der Winkel der sog. schnellen Achse der Folie mit der Polarisationsebene. Das bedeutet also eine Drehung um 90°, wenn die Folie, wie bereits gesagt, unter 45° orientiert aufgebracht ist. Das nun senkrecht polarisierte Licht kommt dann parallel polarisiert zurück. Das so polarisierte Licht kann je nach Orientierung des Polarisators vor dem Detektor zur Erzeugung eines Positiv- oder Negativbildes verwendet werden. Dies kann dazu benutzt werden, um den Kontrast zu erhöhen, indem beispielsweise zwei Bilder elektronisch voneinander abgezogen werden. Das hat den Vorteil, daß die Umgebungsbeleuchtung eliminiert wird.

Verwendet man in einer weiteren Ausgestaltung der Erfindung als Polarisationsfilter eine Achtelwellenlängen-Folie und zirkular polarisiertes Licht, so erreicht man, daß durch das zweimalige Durchgehen des Lichtes das empfangene Licht linear-polarisiert ist.

Eine andere Möglichkeit ist dadurch gegeben, daß das Polarisationsfilter im sichtbaren Lichtbereich eine opake, jedoch im infrarotnahen Bereich eine vollständig transparente Folie aufweist. Dadurch ergibt sich die Möglichkeit, mit nur im Sichtbaren lesbaren Zusatzinformationen eine Täuschung für einen Fälscher vorzunehmen. Diese Zusatzinformation darf dann allerdings im Infrarotbereich nicht opak, sondern muß völlig transparent sein.

Erfindungsgemäß können auch mehrere bildgebende Detektoren mit Polarisatore vor dem abbildenden Objektiv verwendet werden, so daß zur Erzeugung von Negativ-/Positiveffekten diese Polarisatoren wahlweise um 90° gedreht eingesetzt werden können. Vor den bildgebenden Detektoren können Bandpaßinterferenzfilter mit geeigneter Durchlaßwellenlänge und Bandbreite geschaltet werden, um in vorteilhafter Weise das Signal-Rauschverhältnis durch weitgehendes spektrales Ausblenden von Umgebungslicht oder auch vom angestrahlten Objekt erzeugter Lichter zu verbessern.

Zweckmäßigerweise wird die Vignette an einem Kraftfahrzeug, vorzugsweise an der Innenseite der Frontscheibe, angebracht, so daß sie auch leicht von einem Kontrollfahrzeug aus gelesen werden kann, welches den Lichtsender, die Detektor- und die Auswerteeinrichtung im Fahrzeug nach hinten ausgerichtet aufweisen kann.

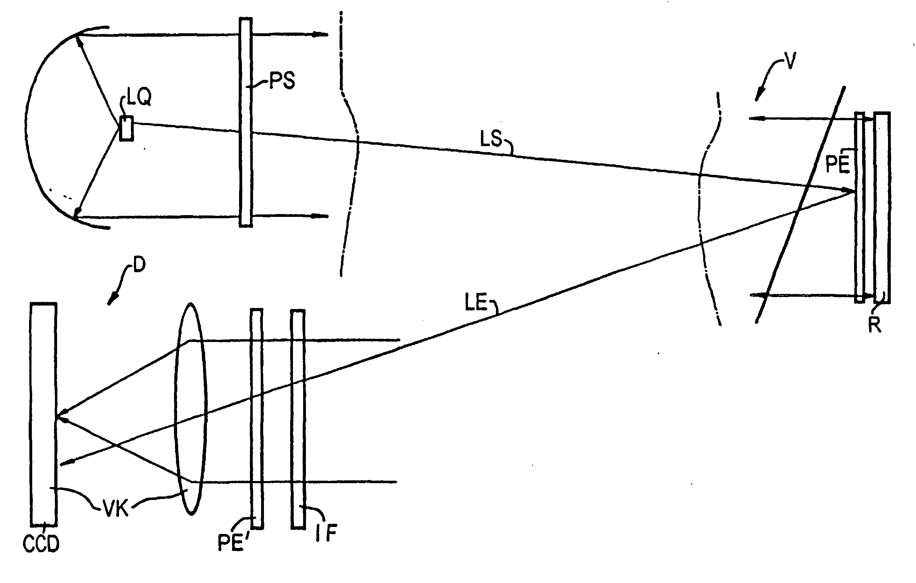

Anhand einer schematischen Darstellung wird mit der einzigen Figur die Erfindung erläutert.

Das Licht eines Infrarot-Scheinwerfers (Lichtquelle) LQ wird durch einen Polarisator PS gesandt und trifft als polarisiertes Licht LS auf die Vignette V. Bei einer Orientierung der "schnellen Achse" der Viertelwellenlängen-Folie als den Polarisationszustand veränderndes Element PE um 45° relativ zur Schwingungsebene polarisierten Lichts LS des Scheinwerfers LQ wird bei doppeltem Durchgang via Retroreflektor (Reflektor) R das reflektierte Licht LE um 90° gegenüber der Scheinwerferlicht-Polarisation gedreht. Dieses Licht LE wird zu der in unmittelbarer Nachbarschaft zum Infrarot-Scheinwerfer LQ angeordneten Videokamera VK rückreflektiert und dort in einer Detektor- und Auswerteeinrichtung D detektiert. Durch Anbringen eines Polarisators PE' und eines Interferenzfilters IF vor dem Kameraobjektiv wird faktisch alles Licht bis auf das erwünschte reflektierte Licht LE vom Kamerachip CCD ferngehalten. Das den Polarisationszustand verändernde Element PE ist in Form einer strukturierten Viertelwellen-Folie realisiert, bei der sich drehende Bereiche und nicht drehende Bereiche abwechseln bzw. bei der die Strukturierung darin besteht, daß in bestimmten Regionen die Folie vorhanden ist und in benachbarten nicht. Je nach Orientierung des Polarisatiors PE' vor dem Detektor D relativ zu dem Polarisator PS vor der Lichtquelle LQ sind die drehenden Bereiche hell oder dunkel. Dabei gilt hell für gekreuzte Polarisatoren und dunkel für parallel orientierte Polarisatoren. Die nicht mit Viertelwellen-Folie bestückten Bereiche verhalten sich komplementär. Bei einer Beleuchtung mit nicht polarisiertem oder mit in der Wellenlänge nicht an die Viertelwellen-Folie angepaßtem Licht läßt sich die Information nicht auslesen. Das hat den Vorteil, daß nur bei einer totalen Kopie der Beleuchtungsbedingungen der Vignettenfolie und der geeigneten Detektoren die Vignette V ausgelesen werden kann.

## Patentansprüche

1. Verfahren zur Verschlüsselung und Überprüfung von Informationen in Form einer Vignette (V), bei welchem eine Vignette (V) bereitgestellt wird, die einen Reflektor (R), der den Polarisationszustand von polarisiertem Licht nicht verändert, und davor angebracht ein den Polarisationszustand veränderndes Element (PE) aufweist, wobei das den Polarisationszustand verändernde Element (PE) durch seine Strukturierung die Information in codierter Form erhält, die darin besteht, daß sich den Polarisationszustand ändernde Bereiche und den Polarisationszustand nicht ändernde Bereiche abwechseln, und wobei aufgrund der entsprechend der Strukturierung veränderten Polarisation des reflektierten Lichtes (LE) die Echtheit und/oder Gültigkeit der Vignette erkannt wird,
**dadurch gekennzeichnet, daß** mit zumindest einer Lichtquelle (LQ), die polarisiertes Licht (LS) sendet, die Vignette (V) bestrahlt wird und das reflektierte Licht (LE) von einer Detektor- und Auswerteeinrichtung (D) empfangen und analysiert wird, wobei der Reflektor (R) einen großen Akzeptanzwinkel besitzt.

2. Verfahren nach Anspruch 1,
**dadurch gekennzeichnet, daß** die Strukturierung des den Polarisationszustand verändernden Elements (PE) durch Stanzen oder Schneiden erfolgt.

3. Verfahren nach Anspruch 1,
**dadurch gekennzeichnet, daß** die Strukturierung des den Polarisationszustand verändernden Elements (PE) durch örtlich variierende thermische Behandlung erfolgt.

4. Verfahren nach Anspruch 1,
**dadurch gekennzeichnet, daß** die Strukturierung des den Polarisationszustand verändernden Elements (PE) durch Prägen oder Bedrucken erfolgt.

5. Verfahren nach einem der Ansprüche 1 bis 4,
**dadurch gekennzeichnet, daß** die Lichtquelle (LQ) und die Detektor- und Auswerteeinrichtung (D) im nahen IR-Bereich betrieben werden.

6. Verfahren nach einem der Ansprüche 1 bis 5,
**dadurch gekennzeichnet, daß** das Licht linear polarisiert ausgesendet wird.

7. Verfahren nach Anspruch 6,
**dadurch gekennzeichnet, daß** das den Polarisationszustand verändernde Element (PE) der Vignette (V) ein Liquid-Crystal-Display ist, welches im doppelten Licht-Durchgang die Polarisationsebene um 90° dreht und dessen Struktur durch geeignete Pixelierung erzeugt wird.

8. Verfahren nach einem der Ansprüche 1 bis 7,
**dadurch gekennzeichnet, daß** in der Detektor- und Auswerteeinrichtung (D) ein oder mehrere bildgebende Detektoren (VK) mit Objektiven verwendet werden, die mit Polarisatoren (PE') vor dem abbildenden Objektiv ausgerüstet sind, und daß zur Erzeugung von Negativ-/Positiveffekten diese Polarisatoren (PE') wahlweise um 90° gedreht eingesetzt werden.

9. Verfahren nach Anspruch 8,
**dadurch gekennzeichnet, daß** vor den bildgebenden Detektor oder die bildgebenden Detektoren Bandpaßinterferenzfilter (IF) mit geeigneter Durchlaßwellenlänge und Bandbreite geschaltet werden.

10. Verfahren nach Anspruch 8 oder 9,
**dadurch gekennzeichnet, daß** die Lichtquelle (LQ) von einem IR-Laser gebildet ist und die Bildgebung durch Abtasten erfolgt.

11. Datenträger in Form einer Vignette (V), die einen Reflektor (R), der den Polarisationszustand von polarisiertem Licht nicht verändert, und davor angebracht ein den Polarisationszustand veränderndes Element (PE) aufweist, wobei das den Polarisationszustand verändernde Element (PE) durch seine Strukturierung die Information in codierter Form enthält, die darin besteht, daß sich den Polarisationszustand ändernde Bereiche und den Polarisationszustand nicht ändernde Bereiche abwechseln,
**dadurch gekennzeichnet, daß** der Reflektor (R) von einer Retro-Reflektorfolie mit einem großen Akzeptanzwinkel und das den Polarisationszustand verändernde Element (PE) von einem strukturierten Polarisationsfilter gebildet werden.

12. Datenträger nach Anspruch 11,
**dadurch gekennzeichnet, daß** das Polarisationsfilter von einer Viertelwellenlängen-Folie gebildet wird, deren "schnelle Achse" um 45° gegen die Polarisationsebene des eingestrahlten Lichts (LS) gedreht orientiert ist.

13. Datenträger nach Anspruch 11,
**dadurch gekennzeichnet, daß** das Polarisationsfilter von einer Achtelwellenlängen-Folie gebildet wird und daß das ausgesandte Licht (LS) zirkular polarisiert ist.

14. Datenträger nach Anspruch 11,
**dadurch gekennzeichnet, daß** das Polarisationsfilter eine im sichtbaren Lichtbereich opake, im IR-nahen Bereich jedoch vollständig transparente Folie aufweist.

15. System zur Überprüfung von Information in codierter Form, bestehend aus einem die Information enthaltenden Datenträger (V) nach einem der Ansprüche 11 bis 14, aus zumindest einer Lichtquelle (LQ) zum Bestrahlen des Datenträgers (V) mit polarisiertem Licht (LS) und aus einer Detektor- und Auswerteeinrichtung (D) zum Empfangen und Auswerten von vom Datenträger (V) reflektierten Licht (LE), wobei der Datenträger (V) zum Anbringen an ein KFZ und die Lichtquelle (LQ) und die Detektor- und Auswerteeinrichtung (D) zum Anordnen in einem Kontrollfahrzeug vorgesehen sind.

## Claims

1. Method of encrypting and checking information in the form of a sticker (V), in which a sticker (V) which has a reflector (R) which does not change the polarisation state of polarised light is provided, and which has attached in front of it an element (PE) which changes the polarisation state, the element (PE) which changes the polarisation state containing the information in coded form through its structuring, which consists of areas which change the polarisation state alternating with areas which do not change the polarisation state, and the genuineness and/or validity of the sticker being recognised because of the polarisation, which changes according to the structuring, of the reflected light (LE),
**characterized in that** the sticker (V) is irradiated with at least one light source (LQ), which transmits polarised light (LS), and the reflected light (LE) is received and analysed by a detector and analysis device (D), the reflector (R) having a large acceptance angle.

2. Method according to Claim 1,
**characterized in that** the element (PE) which changes the polarisation state is structured by punching or cutting.

3. Method according to Claim 1,
**characterized in that** the element (PE) which changes the polarisation state is structured by locally varying thermal treatment.

4. Method according to Claim 1,
**characterized in that** the element (PE) which changes the polarisation state is structured by stamping or printing.

5. Method according to one of Claims 1 to 4,
**characterized in that** the light source (LQ) and detector and analysis device (D) are operated in the near IR range.

6. Method according to one of Claims 1 to 5,
**characterized in that** the light is transmitted linearly polarised.

7. Method according to Claim 6,
**characterized in that** that element (PE) of the sticker (V) which changes the polarisation state is a liquid crystal display, which in the double light pass rotates the plane of polarisation by 90°, and the structure of which is generated by suitable pixelisation.

8. Method according to one of Claims 1 to 7,
**characterized in that** in the detector and analysis device (D) one or more image-giving detectors (VK) with lenses are used, and are equipped with polarisers (PE') in front of the imaging lens, and that to generate positive/negative effects these polarisers (PE') can be used rotated by 90° according to choice.

9. Method according to Claim 8,
**characterized in that** in front of the image-giving detector or image-giving detectors, band pass interference filters (IF) with suitable pass wavelength and bandwidth are connected.

10. Method according to Claim 8 or 9,
**characterized in that** the light source (LQ) is in the form of an IR laser and the image is given by scanning.

11. Data medium in the form of a sticker (V), which has a reflector (R) which does not change the polarisation state of polarised light, and attached in front of it an element (PE) which changes the polarisation state, the element (PE) which changes the polarisation state containing the information in coded form through its structuring, which consists of areas which change the polarisation state alternating with areas which do not change the polarisation state,
**characterized in that** the reflector (R) is in the form of a retro-reflector foil with a large acceptance angle, and the element (PE) which changes the polarisation state is in the form of a structured polarisation filter.

12. Data medium according to Claim 11,
**characterized in that** the polarisation filter is in the form of a quarter-wavelength foil, the "fast axis" of which is oriented rotated by 45° against the plane of polarisation of the irradiated light (LS).

13. Data medium according to Claim 11,
**characterized in that** the polarisation filter is in the form of an eighth-wavelength foil, and that the transmitted light (LS) is circularly polarised.

14. Data medium according to Claim 11,
**characterized in that** the polarisation filter has a foil which is opaque in the visible light range, but fully transparent in the near IR range.

15. System for checking information in coded form, consisting of a data medium (V) containing the information according to one of Claims 11 to 14, of at least one light source (LQ) to irradiate the data medium (V) with polarised light (LS), and of one detector and analysis device (D), to receive and analyse light (LE) which is reflected from the data medium (V), the data medium (V) being provided for attachment to a motor vehicle and the light source (LQ) and detector and analysis device (D) being provided to be arranged in a control vehicle.

## Revendications

1. Procédé pour le codage et la vérification d'informations sous forme d'une vignette (V), dans lequel il est prévu une vignette (V), qui comporte un réflecteur (R) ne modifiant pas l'état de polarisation d'une lumière polarisée et, placé devant, un élément (PE) modifiant l'état de polarisation, dans lequel l'élément (PE) modifiant l'état de polarisation reçoit l'information sous forme codée à travers sa structure, qui consiste en ce que des zones modifiant l'état de polarisation et des zones ne modifiant pas l'état de polarisation alternent et dans lequel l'authenticité et/ou la validité de la vignette est détectée sur la base de la polarisation, modifiée selon la structure, de la lumière réfléchie (LE),
**caractérisé par le fait qu'**on irradie la vignette (V) avec au moins une source lumineuse (LQ) qui émet de la lumière polarisée (LS) et qu'on reçoit et analyse la lumière réfléchie (LE) au moyen d'un dispositif de détection et d'exploitation (D), le réflecteur (R) ayant un grand angle d'acceptance.

2. Procédé selon la revendication 1.
**caractérisé par le fait que** la création de structure de l'élément (PE) modifiant l'état de polarisation s'effectue par estampage ou découpe.

3. Procédé selon la revendication 1,
**caractérisé par le fait que** la création de structure de l'élément (PE) modifiant l'état de polarisation s'effectue par traitement thermique localement variable.

4. Procédé selon la revendication 1,
**caractérisé par le fait que** la création de structure de l'élément (PE) modifiant l'état de polarisation s'effectue par matriçage ou impression.

5. Procédé selon l'une des revendications 1 à 4,
**caractérisé par le fait que** la source lumineuse (LQ) et le dispositif de détection et d'exploitation (D) fonctionnent dans le domaine de l'infrarouge proche.

6. Procédé selon l'une des revendications 1 à 5,
**caractérisé par le fait que** la lumière est émise avec une polarisation linéaire.

7. Procédé selon la revendication 6,
**caractérisé par le fait que** l'élément (PE), modifiant l'état de polarisation, de la vignette (V) est un affichage à cristaux liquides qui tourne de 90° le plan de polarisation lors du double passage de la lumière et dont la structure est produite par une disposition appropriée des pixels.

8. Procédé selon l'une des revendications 1 à 7,
**caractérisé par le fait qu'**on utilise dans le dispositif de détection et d'exploitation (D) un ou plusieurs détecteurs (VK) donnant des images et comportant des objectifs qui sont équipés de polarisateurs (PE') devant l'objectif projecteur et qu'on utilise ces polarisateurs (PE') sélectivement tournés de 90° pour la production d'effets négatifs / positifs.

9. Procédé selon la revendication 8,
**caractérisé par le fait qu'**on place devant le détecteur donnant des images ou devant les détecteurs donnant des images des filtres d'interférences passe-bande (IF) ayant une longueur d'onde passante et une largeur de bande passante appropriées.

10. Procédé selon la revendication 8 ou 9,
**caractérisé par le fait que** la source lumineuse (LQ) est formée par un laser IR et que la génération d'image s'effectue par balayage.

11. Support de données sous forme de vignette (V), qui comporte un réflecteur (R) ne modifiant pas l'état de polarisation d'une lumière polarisée et, placé devant, un élément (PE) modifiant l'état de polarisation, dans lequel l'élément (PE) modifiant l'état de polarisation contient l'information sous forme codée à travers sa structure qui consiste en ce que des zones modifiant l'état de polarisation et des zones ne modifiant pas l'état de polarisation alternent,
**caractérisé par le fait que** le réflecteur (R) est formé par une feuille de rétroréflecteur ayant un grand angle d'acceptance et que l'élément (PE) modifiant l'état de polarisation est formé par un filtre de polarisation structuré.

12. Support de données selon la revendication 11,
**caractérisé par le fait que** le filtre de polarisation est formé par une feuille de quart d'onde dont "l'axe rapide" est orlenté tourné de 45° par rapport au plan de polarisation de la lumière incidente (LS).

13. Support de données selon la revendication 11,
**caractérisé par le fait que** le filtre de polarisation est formé par une feuille de huitième d'onde et que la lumière émise (LS) a une polarisation circulaire.

14. Support de données selon la revendication 11,
**caractérisé par le fait que** le filtre de polarisation comporte une feuille opaque dans le domaine de la lumière visible mais complètement transparente dans le domaine de l'infrarouge proche.

15. Système de vérification d'informations sous forme codée, constituées d'un support (V) de données contenant les informations suivant l'une des revendications 11 à 14, constitué d'au moins une source (LQ) de lumière pour éclairer le support (V) de données par de la lumière (LS) polarisée et d'un dispositif (D) de détection et d'exploitation, qui reçoit et exploite la lumière (LE) réfléchie par le support (V) dé données, le support (V) de données étant destiné à être posé sur un véhicule automobile et la source (LQ) de lumière et le dispositif (D) de détection et d'exploitation a être mis dans un véhicule de contrôle.
